# EUROPÄISCHE PATENTANMELDUNG

(11) **EP 3 597 566 A1**
(43) Veröffentlichungstag der Anmeldung: **22.01.2020**
(21) Anmeldenummer: 19197541.6
(22) Anmeldetag: 18.06.2013
(51) Int. Cl.: B65D 85/804

(54) **PORTIONSKAPSEL ZUR ZUBEREITUNG EINES GETRÄNKS**

(30) Priorität: 18.06.2012 DE 102012105282
(62) Teilanmeldung aus: 17160005.9
(71) Anmelder: K-fee System GmbH, 51469 Bergisch Gladbach (DE)
(72) Erfinder: EMPL, Günter, 51429 Bergisch Gladbach (DE)
(74) Vertreter: Wolff, Felix

(57) **Zusammenfassung**

Die vorliegende Erfindung betrifft eine Portionskapsel zur Herstellung eines Getränks aufweisend einen Kapselkörper (2) mit einem Kapselboden (3) und einem Deckel (4), wobei zwischen dem Kapselboden (3) und dem Deckel (4) ein Hohlraum (100) zur Aufnahme eines pulverförmigen oder flüssigen Getränkesubstrats ausgebildet ist und wobei in dem Hohlraum ein Filterelement (7) angeordnet ist.

## Beschreibung

Die vorliegende Erfindung betrifft eine Portionskapsel zur Herstellung eines Getränks aufweisend einen Kapselkörper mit einem Kapselboden und einem Deckel, wobei zwischen dem Kapselboden und dem Deckel ein Hohlraum zur Aufnahme eines granulierten, pulverförmigen oder flüssigen Getränkesubstrats ausgebildet ist und wobei in dem Hohlraum ein Filterelement angeordnet ist. Des Weiteren betrifft die vorliegende Erfindung ein Verfahren zur Herstellung einer Portionskapsel sowie die Verwendung der Portionskapsel zur Herstellung eines Getränks.

Solche Portionskapseln sind aus dem Stand der Technik allgemein bekannt. Beispielsweise sind in den Druckschiften EP 1792850 B1, EP 1344722 A1, WO 2012/038063 A1 und US 2003/0172813 A1 gattungsgemäße Portionskapseln zur Kaffee- und Espressozubereitung offenbart.

Derartige Portionskapseln zur Herstellung eines Getränkes oder eines Lebensmittels sind bevorzugt kegelstumpfförmig oder zylindrisch geformt und werden beispielsweise aus einer tiefgezogenen Kunststofffolie oder im Kunststoffspritzverfahren hergestellt. Sie haben üblicherweise einen geschlossenen Kapselboden und eine offene Einfüllseite mit einem Kragenrand, auf den, nachdem der Hohlraum der Portionskapsel mit einem Filterelement versehen und einem granulierten, pulverförmigen oder flüssigen Getränkesubstrat befüllt worden ist, eine Deckelfolie aufgesiegelt oder aufgeklebt wird. Das Filterelement wird vorzugsweise zwischen dem Getränkesubstrat und dem Kapselboden angeordnet und stützt sich an diesem ab. Diese Filterelemente sind entweder aus einem thermoplastischen Kunststoff gespritzt oder aus einer Kunststofffolie tiefgezogen oder geprägt oder aus einem gewebten oder nicht gewebten Material hergestellt und verhindern, dass Partikel des Getränkesubstrats in das herzustellende Getränk gelangt.

Für die Zubereitung eines Getränks, beispielsweise eines Kaffeegetränkes, wird die Portionskapsel in eine Brühkammer eines Zubereitungsgerätes eingebracht. Nach oder während des Schließvorganges der Brühkammer wird die Kapsel bevorzugt auf ihrer geschlossenen Bodenseite mittels eines in der Brühkammer angeordneten Öffnungsdornes vorzugsweise geöffnet und nach dem Abdichten der Brühkammer wird vorzugsweise die mit einer Deckelfolie verschlossene Einfüllseite der Portionskapsel mittels mindestens einem Einstechmittel vorzugsweise angestochen. Es gibt aber auch Portionskapseln, die bereits an mindestens einer Seite geöffnet ist, bevor sie in das Zubereitungsgerät eingeführt wird. Anschließend wird eine Zubereitungsflüssigkeit, vorzugsweise heißes Wasser, unter Druck in die Portionskapsel gefördert. Die Zubereitungsflüssigkeit durchströmt das Getränkesubstrat und extrahiert und/oder löst die für die Getränkeherstellung benötigten Stoffe aus dem Getränkesubstrat aus. Für die Zubereitung eines Espresso wirkt zum Extrahieren der ätherischen Öle beispielsweise ein Brühwasserdruck von bis zu 20 bar auf das Kaffeepulver. Dieser Druck wirkt ferner auch auf das zwischen dem Kaffeepulver und dem Kapselboden und vor dem eingestochenen Kapselauslauf liegende Partikelsieb ein.

Nachteilig an den im Kunststoffspritzverfahren oder im Tiefzieh- oder Prägeverfahren hergestellten Filterelementen ist jedoch, dass für die Rückhaltung der Kaffeepartikel die Öffnung der Sieblöcher kleiner als die kleinsten Kaffeepartikel sein müssen. Da, beispielsweise, im Kaffeemahlverfahren zwangsläufig auch ein gewisser Staubanteil anfällt, ergibt sich bei zu großen Sieblöchern ein Kaffeepartikeldurchgang oder bei zu kleinen Sieblöchern, insbesondere bei hohen Drücken, ein Verstopfen der Siebe. Ferner sind unter den Sieben entsprechende, gegen den Kapselboden wirkende Abstützelemente erforderlich, um die Brühwasserdrücke von bis zu 20 bar aufzunehmen und eine Verformung der Siebe in Folge des hohen Brühwasserdrucks (zusammen mit einer hohen Brühwassertemperatur) zu verhindern und um zu vermeiden, dass das Einstechmittel in das Filterelement eindringt und/oder dieses durchdringt. In nachteiliger Weise, erfordern diese Abstützelement insbesondere bei im Spritzgussverfahren hergestellten Siebanordnungen einen zusätzlichen Materialeinsatz, wodurch die Herstellungskosten steigen.

Im Stand der Technik sind deshalb Portionskapseln mit Siebanordnungen bekannt, die diese Nachteile vermeiden sollen. In der US 2778739, der EP 1710173 A1 und der US 5352765 sind Portionskapseln mit Siebanordnungen offenbart, die aus einem Siebträger mit relativ großen Durchgangsöffnungen bestehen, wobei diese Öffnungen mit einem Filtermaterial abgedeckt sind. Nachteil dieser Anordnungen ist, dass zur Darstellung derartiger Siebanordnungen Zusatzkosten für Material und die Fertigung entstehen, da sie aus einem stabilen Siebträger und dem auf dem Siebträger angeordneten Filtermaterial bestehen und/oder dass die zur Verfügung stehende Filterfläche zu klein ist, so dass der Extraktions- oder Lösevorgang vergleichsweise lange dauert.

Es war deshalb die Aufgabe der vorliegenden Erfindung, eine Portionskapsel mit einem Filterelement zur Verfügung zu stellen, welche im Vergleich zum Stand der Technik kostengünstiger zu fertigen ist und/oder bei welcher die im Zusammenhang mit dem Stand der Technik aufgezeigten Nachteile vermieden werden.

Gelöst wird diese Aufgabe mit einer Portionskapsel zur Herstellung eines Getränks aufweisend einen Kapselkörper mit einem Kapselboden und einem Deckel, wobei zwischen dem Kapselboden und dem Deckel ein Hohlraum zur Aufnahme eines pulverförmigen oder flüssigen Getränkesubstrats ausgebildet und in dem Hohlraum ein Filterelement angeordnet ist und das Filterelement aus nicht gewebtem Fasermaterial vorgesehen ist, das plastisch geformt, insbesondere tiefgezogen ist.

Tiefgezogen im Sinne der Erfindung bedeutet, dass ein vormals ebenes Filterelement eine 3D-Form, mit mindestens einer Ein- oder Ausbuchtung erhält.

Die zu diesem Gegenstand der vorliegenden Erfindung gemachten Ausführungen gelten für die anderen Gegenstände der vorliegenden Erfindung gleichermaßen und umgekehrt.

Im Vergleich zum Stand der Technik hat die erfindungsgemäße Portionskapsel den Vorteil, dass ein einfaches und kostengünstiges nicht gewebtes Fasermaterial als Siebelement Verwendung findet. Dieses Material ist plastisch geformt, vorzugsweise tiefgezogen, und somit nicht eben und weist folglich eine vergleichsweise große Filterfläche auf als ein ebenes Filterelement, die insbesondere größer ist als die Querschnittsfläche des Kapselkörpers, an dem es befestigt ist. Im Vergleich zu den aus dem Stand der Technik bekannten Kunststofffiltern hat ein Filterelement aus einem nicht gewebten Fasermaterial zudem den Vorteil, dass es eine deutlich größere Flüssigkeitseintrittsoberfläche aufweist. Ferner wird ein Flüssigkeitsquerfluss (parallel zur Haupterstreckungsebene der Filterebene) ermöglicht, wodurch ein besseres Durchmisch- und Abfließverhalten erzielt wird. Darüber hinaus hat sich gezeigt, dass sich bei der Verwendung eines solchen Filtermaterials die Gefahr von Siebverstopfungen deutlich reduziert bzw. nahezu ausgeräumt ist. Überraschenderweise zeigt sich das nicht gewebte Filtermaterial sowohl bei einer Getränkezubereitung mit einer unter vergleichsweise niedrigen Druck stehenden Zubereitungsflüssigkeit, als auch bei einer Getränkezubereitung mit einer unter vergleichsweise hohen Druck stehenden Zubereitungsflüssigkeit als verstopfungsresistent. Ferner wird zuverlässig stets einen Flüssigkeitsquerfluss im Filterelement aufrechterhalten und ein Abfluss der in das Filterelement eintretenden Flüssigkeiten zu einer Abflussöffnung gewährleistet.

Die Portionskapsel im Sinne der vorliegenden Erfindung umfasst eine vorzugsweise hermetisch dichte Portionskapsel. Dies bedeutet, dass das in der Portionskapsel befindliche Getränke- oder Lebensmittelsubstrat, beispielsweise Kaffeepulver, Suppenpulver oder Tee, vor dem Extraktionsvorgang im Wesentlichen aromadicht gegenüber der Umwelt verschlossen ist. Die Portionskapsel muss aber nicht hermetisch dicht sein, sondern kann auch, vor deren Verwendung in einer hermetisch dichten Verpackung vorgesehen sein, die dann, beispielsweise manuell geöffnet wird. Solche Portionskapseln sind in der Regel an mindestens einer, vorzugsweise zwei Seiten geöffnet, d.h. von der Zubereitungsflüssigkeit durchströmbar, ohne dass sie angestochen wird.

Vorzugsweise ist das nicht gewebte Fasermaterial ein Vlies. Ein Vlies im Sinne der Erfindung ist eine ungeordnete, nicht gewebte Struktur aus Fasern, insbesondere Kunststofffasern. Ein Vlies im Sinne der Erfindung beinhaltet vorzugsweise kein Papier oder Papier-ähnliche Stoffe, sondern ist vollständig aus Kunststoff gefertigt.

Gemäß einer weiteren bevorzugten Ausführungsform der vorliegenden Erfindung ist vorgesehen, dass das Vlies einen aus Kunststoff-Feinfasern, beispielsweise Polyester-Feinfasern, hergestellten Vliesstoff umfasst, welcher insbesondere ein Wirrfaser- und/oder faserorientierter-Vliesstoff ist. Das Vlies umfasst bevorzugt eine Massenbelegung (auch als Grammatur oder Flächengewicht bezeichnet) zwischen 20 und 140 Gramm pro Quadratmeter, besonders bevorzugt zwischen 60 und 80 Gramm pro Quadratmeter, und ganz besonders bevorzugt, von im Wesentlichen 70 Gramm pro Quadratmeter. Das Filterelement bzw. das Vlies weist bevorzugt eine Dicke zwischen 0,2 und 0,8 Millimetern, besonders bevorzugt zwischen 0,3 und 0,35 Millimetern, und ganz besonders bevorzugt, von im Wesentlichen 0,32 Millimetern auf. Das Vlies ist derart ausgebildet, dass die Luftdurchlässigkeit des Vlieses bei 100 Pascal bevorzugt zwischen 1000 und 3000 l/(m²s), besonders bevorzugt zwischen 1500 und 2500 (l/m²s) und ganz besonders bevorzugt, im Wesentlichen bei 2000 l/(m²s) liegt. Es hat sich in überraschender und nicht vorhersehbarer Weise gezeigt, dass mit derartigen Vliesstoffen optimale Ergebnisse hinsichtlich Extraktionseffizienz, Durchmisch- und Abfließverhalten, sowie Verstopfungsresistenz zu erzielen sind und sich trotzdem die "Crema" bildet.

Gemäß einer bevorzugten Ausführungsform der vorliegenden Erfindung weist das nicht gewebte Fasermaterial eine Filzstruktur auf. Insbesondere handelt es sich dabei um eine Nadelfilzstruktur. Vorzugsweise besteht das Fasermaterial aus mindestens einer Filzstruktur und einer Trägerstruktur, insbesondere einer Gewebestruktur, wobei, besonders bevorzugt die Filzstruktur, zumindest einen Teilabschnitt des Volumens, die Trägerstruktur umfasst. Vorzugsweise erstreckt sich die Filzstruktur über der gesamten Querschnitt der Trägerstruktur, besonders bevorzugt aber nur über nur über einen Teilbereich der Höhe. Vorzugsweise ist die Filzstruktur form- kraft und/oder stoffschlüssig mit der Trägerstruktur verbunden. Vorzugsweise weist das Fasermaterial zwei oder mehr Filzstrukturen auf, die durch die Trägerstruktur vorzugsweise voneinander getrennt sind. Die Dicke der beiden Filzstrukturen kann gleich oder unterschiedlich sein. Vorzugsweise ist eine dem Pulver oder Tee zugewandte Filzstruktur dünner als die dem Kapselboden zugewandte Filzstruktur oder umgekehrt. Vorzugsweise wird die Oberfläche der Filzstruktur behandelt, beispielsweise wärmebehandelt, um beispielsweise lose Fasern zu fixieren. Vorzugsweise wird das eine Filzstruktur aufweisende Filterelement lediglich in die Kapsel, insbesondere auf deren Boden, eingelegt. Das Filterelement kann aber auch mit der Kapsel, insbesondere deren Boden, insbesondere stoffschlüssig, verbunden werden. Beim Perforieren kann das Perforationsmittel in dieses Filterelement eindringen. Vorzugsweise werden mehrere Filterelemente, die eine oder mehrere Filzstrukturen und eine Trägerstruktur aufweisen, in der Kapsel übereinander angeordnet, ggf. miteinander verbunden.

Ein eine Trägerstruktur, insbesondere eine Gewebestruktur, und eine Filzstruktur aufweisendes Fasermaterial wird beispielsweise dadurch hergestellt, dass eine Gewebestruktur bestehend aus Längs- und Querfäden zur Verfügung gestellt wird. Für die Konstruktion eines Filzes, insbesondere eines Nadelfilzes, werden vorzugsweise Fasereinheiten ausgewählt von 0.8 - 7 dtex. Die Verbindung der Einzelfasern miteinander zu einem Filz und/oder dessen Verankerung in der Trägerstruktur findet vorzugsweise durch den Produktionsprozess des Vernadelns statt. Dabei werden Nadeln mit umgekehrten Widerhaken in das vorgelegte Faserpaket mit hoher Geschwindigkeit eingestochen und wieder herausgezogen. Durch die Widerhaken werden die Fasern über eine Vielzahl entstehender Schlaufen miteinander und/oder mit dem Trägergewebe verschlungen.

Das Trägerelement aufweisend eine oder mehrere Filzstrukturen umfasst bevorzugt eine Massenbelegung (auch als Grammatur oder Flächengewicht bezeichnet) zwischen 100 und 1200 Gramm pro Quadratmeter, besonders bevorzugt zwischen 200 und 1150 Gramm pro Quadratmeter, und ganz besonders bevorzugt, von im Wesentlichen 150 - 250 Gramm pro Quadratmeter für die Herstellung von Tee und 600 - 1200 Gramm pro Quadratmeter für die Herstellung von Kaffee, Espresso oder dergleichen. Das Filterelement bzw. das Vlies weist bevorzugt eine Dicke zwischen 0,8 und 3,3 Millimetern, besonders bevorzugt zwischen 1,1 und 3,0 Millimetern, und ganz besonders bevorzugt, 1,2 - 1,4 Millimeter für die Herstellung von Tee und 2,6 - 3,0 für die Herstellung von Kaffee auf.

Erfindungsgemäß wird für die Herstellung des Filterelementes das Fasermaterial plastisch geformt, insbesondere tiefgezogen. Dabei wird das ebene, beispielsweise als Bahnmaterial, oder Blatt, Bogen oder Platte zur Verfügung gestellte, Fasermaterial in eine dreidimensionale Form gebracht. Das plastische Verformen, insbesondere Tiefziehen, des nicht gewebten Fasermaterials erfolgt vorzugsweise unter Druck- und/oder Temperatureinfluss. Vorzugsweise wird dazu ein Stempel in eine Matrize gedrückt. Das Fasermaterial befindet sich dann zwischen dem Stempel und der Matrize und wird dadurch geformt, beispielsweise tiefgezogen. Nach dem plastischen Verformen behält das Filterelement seine dreidimensionale Form (3D-Form). Durch das plastische Formen, insbesondere Tiefziehen, bildet das Fasermaterial einen Raum aus, der mit dem Getränke- oder Lebensmittelsubstrat befüllt werden kann. Es war für den Fachmann erstaunlich, dass das Fasermaterialplastisch geformt, insbesondere tiefgezogen werden kann, ohne dass es seine Filtereigenschaften verliert. Gemäß einer weiteren bevorzugten Ausführungsform der vorliegenden Erfindung wird das ebene Fasermaterial geprägt. Die plastische Verformung kann jedoch auch durch jedes andere dem Fachmann geläufige Umformverfahren erfolgen.

Das Filterelement, d.h. beispielsweise das Vlies- oder das Filzmaterial, wird, gemäß einem bevorzugten oder einem weiteren Gegenstand der vorliegenden Erfindung mit der Seitenwand der Portionskapsel oder mit dem Kragenrand, insbesondere durch Schweißen, beispielsweise mit Ultraschall oder durch Kleben verbunden, bevor das Getränkesubstrat in den Kapselkörper eingefüllt wird.

Die zu diesem Gegenstand der vorliegenden Erfindung gemachten Ausführungen gelten für die anderen Gegenstände der vorliegenden Erfindung gleichermaßen und umgekehrt.

Gemäß noch einem weiteren oder bevorzugten Gegenstand der vorliegenden Erfindung ist das Filterelement mit dem Kragenrand der Portionskapsel, d.h. mit dem insbesondere horizontal von der Seitenwand abstehenden Flansch der Portionskapsel, insbesondere durch Schweißen, beispielsweise mit Ultraschall oder durch Kleben, verbunden, vorzugsweise bevor das Getränkesubstrat in den Kapselkörper eingefüllt wird. Vorzugsweise ist dafür der äußere Rand des Filterelementes ebenfalls als Flansch gestaltet, der auf dem Kragenrand der Portionskapsel aufliegt. Der Durchmesser des Filterelementes ist vorzugsweise gleich oder kleiner, insbesondere geringfügig kleiner, als der äußere Durchmesser des Kragenrandes. Vorzugsweise wird bei dieser Ausführungsform die Deckelfolie mit dem Filterelement, insbesondere mit dessen Randbereich, beispielsweise durch Kleben oder Schweißen verbunden. Die Verbindung der Deckelfolie mit dem Filterelement kann gleichzeitig oder zeitlich versetzt mit der Verbindung zwischen Filterelement und Portionskapsel erfolgen, wobei vorzugsweise zunächst das Filterelement mit der Portionskapsel verbunden wird und dann die Deckelfolie an dem Filterelement befestigt wird. Es war für den Fachmann überaus erstaunlich und nicht zu erwarten, dass auch diese Ausführungsform hermetisch abgeschlossenen sein kann.

Die zu diesem Gegenstand der vorliegenden Erfindung gemachten Ausführungen gelten für die anderen Gegenstände der vorliegenden Erfindung gleichermaßen und umgekehrt.

Vorzugsweise ist das Filterelement beabstandet von dem Kapselboden vorgesehen, d.h. zumindest bevor das Substrat mit der Flüssigkeit beaufschlagt wird, berührt es den Kapselboden nicht. Besonders bevorzugt berührt das Filterelement den Kapselboden niemals. Diese Ausführungsform hat den Vorteil, dass das Filterelement beim Aufstechen der Portionskapsel nicht verletzt werden kann.

Vorzugsweise weist ist die Seitenwand des Filterelements im Wesentlichen zylindrisch oder kegelstumpfförmigen gestaltet und weist beispielsweise einen im Wesentlichen ebenen-, elliptischen oder Halbkugel-förmigen Boden auf. Vorzugsweise weist insbesondere die Seitenwand eine Prägung auf, was deren Oberfläche vergrößert. Beispielsweise ist die Seitenwand wellenförmig oder zick-zack-förmig gestaltet. Vorzugsweise liegt die Seitenwand des Filterelementes, vor der Beaufschlagung der Portionskapsel mit der Flüssigkeit zumindest nicht vollständig an der Seitenwand der Portionskapsel an, wobei, besonders bevorzugt, der Druck der Flüssigkeit die Anlagefläche der Seitenwand des Filterelementes an der Seitenwand der Portionskapsel vergrößert. Dabei wird der Boden des Filterelementes vorzugsweise angehoben.

Der Kapselkörper ist bevorzugt kegelstumpfförmig oder zylindrisch geformt und wird beispielsweise aus Kunststoff, einem Naturstoff und/oder einem biologisch abbaubaren Werkstoff und/oder einem metallischen Werkstoff, aus einer tiefgezogenen Kunststofffolie oder im Kunststoffspritzverfahren hergestellt. Das Material aus dem der Kapselkörper hergestellt ist, kann mehrlagig vorgesehen sein. Der Kapselkörper weist vorzugsweise oder erfindungsgemäß auf der Einfüllseite einen Kragenrand auf, auf den direkt oder indirekt eine Deckelfolie aufgesiegelt oder aufgeklebt ist. Alternativ ist denkbar, dass der Kapselkörper und ein Kapseldeckel mittels eines mechanischen Verfahrens miteinander verbunden sind. Der Boden der Portionskapsel ist vorzugsweise geschlossen und wird vorzugsweise erst in der Brühkammer mittels eines von außen auf den Portionskapselboden wirkenden Perforationsmittels zur Erzeugung einer Auslauföffnung perforiert. Alternativ wäre aber ebenso denkbar, dass der Boden der Portionskapsel bereits werksseitig mit einer Auslauföffnung versehen ist, welche mittels einer Dichtfolie vorzugsweise verschlossen ist. Die Dichtfolie ist dann beispielsweise mittels des Perforationsmittels perforierbar oder von Hand vom Kapselboden abziehbar. Das Filterelement ist vorzugsweise reißfest ausgebildet. Bei der Dichtfolie handelt es sich vorzugsweise um eine Kunststofffolie, die mindestens eine Barriereschicht, beispielsweise eine Metallschicht, insbesondere eine Aluminium-Schicht oder eine Aluminiumoxid-Schicht aufweist. Alternativ kann als Dichtfolie eine reine Kunststofffolie mit einer Barriereschicht für den Aromastoff des herzustellenden Getränks zum Einsatz kommen. Die Kunststofffolie weist vorzugsweise auf ihrer der Kapsel zugewandten Seite eine "Peel-Schicht" auf, um die Kunststofffolie vergleichsweise leicht von dem Kapselboden lösen zu können.

Die Auslauföffnung ist vorzugsweise so groß vorgesehen, dass sie ein gegebenenfalls vorhandenes Perforationsmittel berührungsfrei aufnehmen kann. Besonders bevorzugt ist die Auslauföffnung so groß vorgesehen, dass an ihr, beim Ausströmen des fertiggestellten Getränkes kein nennenswerter Druckverlust entsteht, insbesondere dass es zu keiner nennenswerten Verwirbelung des fertiggestellten Getränkes kommt, der zu einem Gaseintrag in das Getränk und damit zur Schaumbildung führen könnte.

Alternativ liegt das Material des Kapselbodens nach dem Aufstechen an dem Aufstechmittel an. Das fertiggestellte Getränk läuft zwischen dem Aufstechmittel und dem Material in die Kapsel. Dabei entsteht ein gezielter Druckverlust und/oder eine gezielte Verwirbelung, die beim Kaffee eine "Crema" erzeugt.

Gemäß eines weiteren bevorzugten Gegenstands der vorliegenden Erfindung ist vorgesehen, dass das Filterelement elastisch ausgebildet ist. Wenn der Kapselboden von einem äußeren Perforationsmittel durchstochen wird, kann das Filterelement bei einem Kontakt mit dem Perforationsmittel aufgrund seiner Elastizität derart nachgeben bzw. gedehnt werden, dass eine Perforation des Filterelements verhindert wird. Somit wird die Gefahr ausgeräumt, dass das Filterelement durch das Perforationsmittel perforiert wird und Getränkesubstanz ungefiltert aus der Portionskapsel gespült wird.

Eine feste Beabstandung zwischen dem Filterelement und dem Kapselboden ist bevorzugt.

Gemäß einer weiteren bevorzugten Ausführungsform der vorliegenden Erfindung ist vorgesehen, dass das Filterelement von dem Perforationsmittel gespannt, angestochen und/oder durchstochen wird.

Gemäß einer weiteren erfindungsgemäßen oder bevorzugten Ausführungsform der vorliegenden Erfindung ist vorgesehen, dass das Filterelement an dem Kapselkörper oder an dem Kragenrand befestigt ist, wobei das Filterelement insbesondere durch Siegeln oder Kleben befestigt ist. Vorteilhafterweise wird somit ein Verrutschen des Filterelements in der Portionskapsel verhindert. Des Weiteren wird dadurch verhindert, dass die Flüssigkeit das Filterelement ungewollt umfließt. Diese Befestigung erfolgt vorzugsweise durch Ultraschallschweißen.

Gemäß einer weiteren bevorzugten Ausführungsform der vorliegenden Erfindung ist vorgesehen, dass der Kapselboden eine Ausbuchtung in eine der Einfüllseite entgegengesetzte Richtung aufweist. Vorteilhafterweise dient die Ausbuchtung zur Aufnahme des Perforierungsmittels, so dass beim Einstechen des Perforierungsmittels in den Kapselboden der Kapselboden im Bereich der Ausbuchtung zwar perforiert wird, das Perforierungsmittel aber anschließend im Hohlraum der Ausbuchtung verbleibt. Einer Perforierung des Filterelements wird somit vorgebeugt. Insbesondere ist bei dieser Ausführungsform ein Anheben des Filterelements durch das Perforierungsmittel nicht erforderlich.

Gemäß einer weiteren bevorzugten Ausführungsform der vorliegenden Erfindung ist vorgesehen, dass das Filterelement derart ausgebildet ist, dass bei einer Perforation des Kapselbodens durch ein äußeres Perforationsmittel zumindest teilweise ein Abheben des Filterelements vom Kapselboden erfolgt. Auf diese Weise wird eine Perforierung des Filterelements durch das Perforierungsmittel wirksam verhindert.

Gemäß einer weiteren bevorzugten Ausführungsform der vorliegenden Erfindung ist vorgesehen, dass der Kapselboden eine Sollbruchstelle aufweist, welche dazu vorgesehen ist, infolge eines mechanischen Kontakts mit einem äußeren Perforationsmittel aufzureißen, wobei die Sollbruchstelle vorzugsweise eine Mehrzahl von sternförmig um einen zentralen Punkt des Kapselbodens angeordnete Schwächungslinien umfasst. Der Kapselboden weist entlang der Schwächungslinien vorzugsweise eine reduzierte Materialstärke auf und/oder ist entlang der Schwächungslinien perforiert. In vorteilhafter Weise wird durch die Realisierung der Sollbruchstelle die Perforation des Kapselbodens begünstigt. Dies hat ferner den Vorteil, dass eine weniger scharfe Perforierungsspitze zur Perforierung des Kapselbodens Verwendung finden kann, so dass die Gefahr einer Beschädigung des Filterelements beim Anheben des Filterelements durch die Perforierungsspitze reduziert wird. Insbesondere reicht nun ein stumpfes Perforierungsmittel zur Perforation des Kapselbodens aus.

Gemäß einer weiteren bevorzugten Ausführungsform weist der Kapselboden permanent eine Ausgangsöffnung auf, welche vorzugsweise mit einer Folie abgedichtet ist, wobei die Folie besonders bevorzugt eine Abziehlasche zum Abziehen der Folie von Hand aufweist. Eine Perforation des Kapselbodens mittels eines äußeren Perforationsmittel ist hierbei vorteilhafterweise nicht erforderlich. Vor dem Einlegen der Portionskapsel in die Brühkammer wird die Folie mittels der Abziehlasche einfach vom Kapselboden abgezogen und der Brühvorgang kann gestartet werden. Die Kombination einer vorgefertigten und somit vergleichsweise großen Ausgangsöffnung mit einem Filterelement aus einem nicht gewebten Fasermaterial, insbesondere ein Vlies-, Filz-, insbesondere Nadelfilz, hat den Vorteil, dass die Getränkeflüssigkeit nicht unter hohem Druck aus der Ausgangsöffnung herausfließt und somit die Schaumbildung ("Crema"), insbesondere bei der Herstellung von Kaffee oder Tee verhindert wird.

Ein weiter bevorzugter oder erfindungsgemäßer Gegenstand der vorliegenden Erfindung ist eine Portionskapsel, bei der das Filterelement einen Filterbereich und einen Verbindungsbereich aufweist, wobei der Verbindungsbereich abgewinkelt von dem Filterbereich vorgesehen ist.

Die zu diesem Gegenstand der vorliegenden Erfindung gemachten Ausführungen gelten für die anderen Gegenstände der vorliegenden Erfindung gleichermaßen und umgekehrt.

Erfindungsgemäß weist das Filterelement einen Filterbereich und einen Verbindungsbereich auf. In dem Verbindungsbereich wird das Filterelement, insbesondere durch Siegeln, mit dem Kapselkörper oder mit dem Kapselboden verbunden. Der Filterbereich wird dem fertiggestellten Getränk durchströmt. Erfindungsgemäß sind der Verbindungsbereich und der Filterbereich nun in einem Winkel zueinander vorgesehen. Beispielsweise liegt der Verbindungsbereich des Filterelementes an der konischen Innenfläche des Kapselkörpers an und der Filterbereich ist parallel zu dem Boden der Portionskapsel vorgesehen oder gekrümmt vorgesehen.

Diese Ausführungsform ist insbesondere für die Herstellung von Tee geeignet.

Als Filtermaterial kommt vorzugsweise ein Papiermaterial oder ein papierähnliches Material zum Einsatz das jeweils, zumindest abschnittsweise, vorzugsweise mit einem Kunststoff geschichtet ist, damit es siegelfähig ist.

Ein weiter bevorzugter oder erfindungsgemäßer Gegenstand der vorliegenden Erfindung ist eine Portionskapsel, bei dem das Filterelement einen Filterbereich aufweist, der gekrümmt vorgesehen ist.

Die zu diesem Gegenstand der vorliegenden Erfindung gemachten Ausführungen gelten für die anderen Gegenstände der vorliegenden Erfindung gleichermaßen und umgekehrt.

Der Filterbereich ist vorugsweise vom Kapselboden beabstandet vorgesehen, insbesondere soweit vom Kapselboden beabstandet vorgesehen, dass der Filterbereich von einem möglicherweise vorhandenen Aufstechdorn nicht an- oder durchstochen wird und/oder dass der Filterbereich eine Ablauföffnung im Kapselboden berührt.

Diese Ausführungsform ist insbesondere für die Herstellung von Tee geeignet.

Als Filtermaterial kommt vorzugsweise ein Papiermaterial oder ein papierähnliches Material zum Einsatz das jeweils, zumindest abschnittsweise, vorzugsweise mit einem Kunststoff geschichtet ist, damit es siegelfähig ist.

Noch ein weiterer erfindungsgemäßer oder bevorzugter Gegenstand der vorliegenden Erfindung ist eine Portionskapsel, bei der das Filterelement in seinem Verbindungsbereich mindestens eine Falte aufweist.

Die zu diesem Gegenstand der vorliegenden Erfindung gemachten Ausführungen gelten für die anderen Gegenstände der vorliegenden Erfindung gleichermaßen und umgekehrt.

Gemäß diesem Gegenstand der vorliegenden Erfindung weist das Filterelement in seinem Verbindungsbereich, d.h. in dem Bereich, in dem das Filterelement mit dem Kapselkörper oder Kapselboden, vorzugsweise durch Siegeln, verbunden ist, mindestens eine, vorzugsweise eine Vielzahl von Falten auf. Die Falten sind vorzugsweise in ihrer Form und/oder Größe unterschiedlich und/oder in unregelmäßigen Abständen an dem Umfang des Filterelementes vorgesehen. Vorzugsweise werden die überlappenden Bereiche der Falte beim Siegeln miteinander verbunden. Vorzugsweise liegt die Falte an dem Verbindungsgebereich des Filterelementes an.

Vorzusweise entstehen die Falten dadurch, dass ein ebenes Filterelement in den Kapselkörper eingeführt wird, ohne ihn dabei plastisch zu verformen. Trotz der Falten und der damit verbundenen Überlappungen gelingt es das Filterelement im Verbindungsbereich fest mit dem Kapselkörper zu verbinden, ohne dass das Filterelement Schaden nimmt.

Diese Ausführungsform ist insbesondere für die Herstellung von Tee geeignet.

Als Filtermaterial kommt vorzugsweise ein Papiermaterial oder ein papierähnliches Material zum Einsatz das jeweils, zumindest abschnittsweise, vorzugsweise mit einem Kunststoff geschichtet ist, damit es siegelfähig ist.

Noch ein weiterer erfindungsgemäßer oder bevorzugter Gegenstand der vorliegenden Erfindung ist eine Portionskapsel bei der das Filterelement in seinem Verbindungsbereich mindestens einen mehrlagigen Bereich aufweist.

Die zu diesem Gegenstand der vorliegenden Erfindung gemachten Ausführungen gelten für die anderen Gegenstände der vorliegenden Erfindung gleichermaßen und umgekehrt.

Gemäß diesem Gegenstand der vorliegenden Erfindung weist das Filterelement in seinem Verbindungsbereich, d.h. in dem Bereich, in dem das Filterelement mit dem Kapselkörper oder Kapselboden, vorzugsweise durch Siegeln, verbunden ist, mindestens einen, vorzugsweise eine Vielzahl von mehrlagigen Bereichen auf. Vorzugsweise weist der mehrlagige Bereich drei Schichten des Filtermaterials auf. Die mehrlagigen Bereiche sind vorzugsweise in ihrer Form und/oder Größe unterschiedlich und/oder in unregelmäßigen Abständen an dem Umfang des Filterelementes vorgesehen. Vorzugsweise werden die Lagen der mehrlagigen Bereiche beim Siegeln miteinander verbunden.

Vorzusweise entstehen die mehrlagigen Bereiche dadurch, dass ein ebenes Filterelement in den Kapselkörper eingeführt wird, ohne ihn dabei plastisch zu verformen. Trotz der mehrlagigen Bereiche und der damit verbundenen Überlappungen gelingt es das Filterelement im Verbindungsbereich fest mit dem Kapselkörper zu verbinden, ohne dass das Filterelement Schaden nimmt.

Diese Ausführungsform ist insbesondere für die Herstellung von Tee geeignet.

Als Filtermaterial kommt vorzugsweise ein Papiermaterial oder ein papierähnliches Material zum Einsatz das jeweils, zumindest abschnittsweise, vorzugsweise mit einem Kunststoff geschichtet ist, damit es siegelfähig ist.

Vorzugsweise ist ein Bestandteil des Filterelements Papier.

Noch ein Gegenstand der vorliegenden Erfindung ist eine Portionskapsel bei der das Filterelement einen vieleckigen Umfang aufweist, vorzugsweise sechseckig vorgesehen ist.

Vorzugsweise ist das Filterelement an den Kapselboden gesiegelt, wobei die Siegelnaht besonders bevorzugt kreisringförmig vorgesehen ist. Vorzugsweise beträgt der mittlere Durchmesser des Kreisrings 22 - 25 mm beträgt.

Ein weiterer Gegenstand der vorliegenden Erfindung ist ein Verfahren zur Herstellung einer Portionskapsel mit einem Filterelement aus einem nicht gewebten Fasermaterial, bei dem das Filterelement aus einem ebenen Material, vorzugsweise einer Warenbahn oder einem Blatt, einer Platte oder dergleichen, plastisch geformt, insbesondere tiefgezogen wird.

Die zu diesem Gegenstand der vorliegenden Erfindung gemachte Offenbarung gilt für die anderen Gegenstände der vorliegenden Erfindung gleichermaßen und umgekehrt.

Vorzugsweise wird das Filterelement vor oder nach dem Formen ausgeschnitten oder ausgestanzt und, besonders bevorzugt von dem Messer in die Kapsel eingeführt und dort, vorzugsweise beabstandet vom Kapselboden mit dem Kapselkörper oder dem Kragenrand verbunden und sodann das Getränke- oder Lebensmittelsubstrat in die Portionskapsel gefüllt und die Kapsel dann mit einer Deckelfolie verschlossen.

Besonders bevorzugt wird die Deckelfolie an dem Filterelement befestigt. Dies erfolgt, nachdem das Getränke- oder Lebensmittelsubstrat in die Portionskapsel eingefüllt worden ist.

Vorzugsweise wird das ausgeschnittene Filterelement zumindest eine gewisse Wegstrecke von dem es ausschneidende Messer, insbesondere Hohlmesser, transportiert. Vorzugsweise wird das ausgeschnittene Filterelement von einer Sonotrode, die fürs Ultraschallschweißen benötigt wird weitertransportiert und/oder an die Kapsel, insbesondere deren Seitenwand oder Kragenrand, angedrückt.

Ein weiterer Gegenstand der vorliegenden Erfindung ist ein Verfahren zur Herstellung einer Portionskapsel mit einem Filterelement aus einem nicht gewebten Fasermaterial, bei dem ein ebenes Filterelement mit einem Stempel in eine Portionskapsel eingeführt und dabei geformt und anschließend mit dem Kapselkörper verbunden, insbesondere durch Siegeln verbunden wird.

Die zu diesem Gegenstand der vorliegenden Erfindung gemachte Offenbarung gilt für die anderen Gegenstände der vorliegenden Erfindung gleichermaßen und umgekehrt.

Bei dem erfindungsgemäßen Verfahren wird ein, beispielsweise kreisscheiben-förmiges, Filterelement von einem Stempel in den Kapselkörper hineingedrückt. Dabei verformt sich das Filterlement so, dass ein Teil des Filterelementes an dem Kapselkörper anliegt. Vorzugsweise wird das Filterelement insgesamt die Portionskapsel hineingeschoben, aber lediglich so weit, dass ein Freiraum zwischen dem Filterelement und dem Kapselboden bestehen bleibt. Nachdem das Filterelement in die Kapsel eingeschoben worden ist, wird es mit dem Kapselkörper oder dem Kragenrand verbunden, vorzugsweise durch Siegeln verbunden. Vor dem Siegel wird Fliterelement vorzugsweise entspannt. Insbesondere wird der Bereich, der später der Filterbereich ist, entspannt. Die kann beispielsweise dadurch erfolgen, dass der Druck, der von dem Stempel auf diesen Bereich ausgeübt wird, reduziert wird.

Ein weiterer Gegenstand der vorliegenden Erfindung ist die Verwendung einer Portionskapsel zur Herstellung eines Getränks, vorzugsweise zur Herstellung eines Kaffee-, Kakao-, Tee- und/oder Milchgetränks oder eines Lebensmittels, insbesondere eine Suppe.

Die zu einem Gegenstand der vorliegenden Erfindung gemachten Ausführungen gelten für die anderen Gegenstände gleichermaßen und umgekehrt.

Ausführungsbeispiele der Erfindung sind in den Figuren dargestellt und in der nachfolgenden Beschreibung näher erläutert. Die Figuren sind lediglich beispielhaft beschrieben und schränken den allgemeinen Erfindungsgedanken nicht ein. Die Beschreibung gilt für alle Gegenstände der vorliegenden Erfindung gleichermaßen.
- **Figur 1**: zeigt einen Längsschnitt durch eine Portionskapsel gemäß einer ersten Ausführungsform der vorliegenden Erfindung, die für die Zubereitung von Espresso eingerichtet ist.
- **Figur 2**: zeigt einen Längsschnitt durch eine in einer geschlossenen Brühkammer liegende Portionskapsel gemäß der ersten Ausführungsform der vorliegenden Erfindung
- **Figur 3**: zeigt einen Längsschnitt durch eine in einer geschlossenen Brühkammer liegende Portionskapsel gemäß einer zweiten Ausführungsform der vorliegenden Erfindung.
- **Figuren 4a, 4b**: zeigen schematische Schnittbildansichten einer Portionskapsel gemäß einer dritten Ausführungsform der vorliegenden Erfindung.
- **Figuren 5a, 5b**: zeigen schematische Schnittbildansichten einer Portionskapsel gemäß einer vierten Ausführungsform der vorliegenden Erfindung.
- **Figuren 6a, 6b**: zeigen schematische Aufsichten eines Kapselbodens einer Portionskapsel gemäß einer siebten Ausführungsform der vorliegenden Erfindung.
- **Figur 7**: zeigt eine Schnittbildansicht einer Portionskapsel gemäß einer achten Ausführungsform der vorliegenden Erfindung.
- **Figuren 8a -c**: zeigen unterschiedliche Ausführungsformen des Filterelementes mit Filz, insbesondere Nadelfilz.
- **Figuren 9a, b**: zeigen eine Ausführungsform eines tiefgezogen Filterelementes.
- **Figur 10**: zeigt eine weitere Ausführungsform eines tiefgezogenen Filterelemetes.
- **Figur 11**: zeigt eine weitere Ausführungsform des erfindungsgemäßen Filterelementes.

In den verschiedenen Figuren sind gleiche Teile stets mit den gleichen Bezugszeichen versehen und werden daher in der Regel auch jeweils nur einmal benannt bzw. erwähnt.

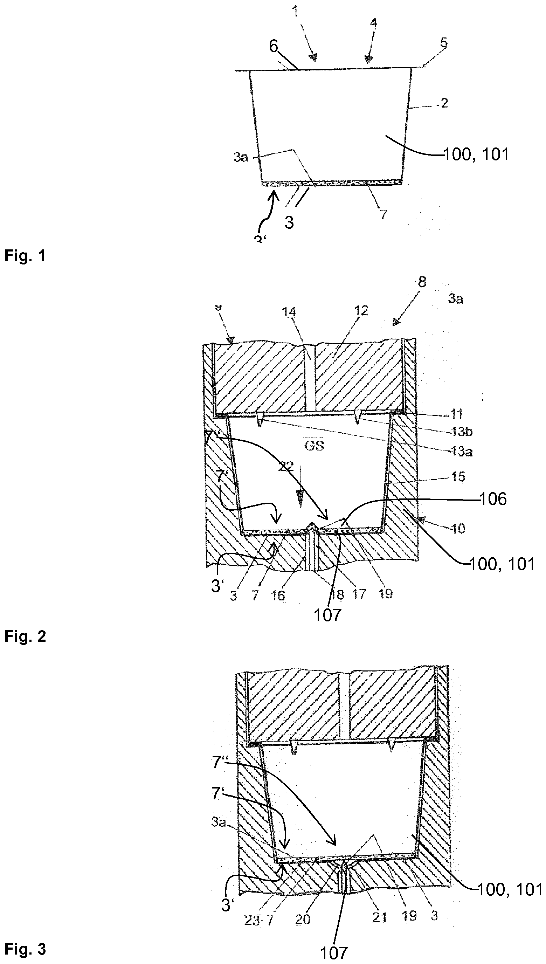

In **Figur 1** ist eine erste Ausführungsform der erfindungsgemäßen Portionskapsel 1 dargestellt. Die Portionskapsel 1 umfasst einen kegelstumpfförmigen Kapselkörper 2 mit einem geschlossenen Kapselboden 3 und mit einem an seiner Einfüllseite 4 angeordneten Kragenrand 5, auf den eine Deckelfolie 6 aufgeschweißt oder geklebt ist. Zwischen dem Kapselboden 3 und der Deckelfolie 6 ist somit ein, vorzugsweise luft- und aromadicht verschlossener Hohlraum 100, ausgebildet, welcher mit einer pulver- und granulatförmigen Getränkesubstanz 101 gefüllt ist. Die Getränkesubstanz 101 umfasst dabei beispielsweise ein Kaffee-, Kakao-, Tee- und/oder Milchpulver (bzw. -granulat). Auf der Innenseite 3a des geschlossenen Kapselkörperbodens 3, d.h. innerhalb des Hohlraums 100, ist ein Filterelement 7, bestehend aus einem nicht gewebtem Fasermaterial angeordnet. Das Fliterelemnt ist tiefgezogen, d.h. ist nicht eben. Das Filterelement 7 liegt entweder lose auf der Innenseite 3a des Kapselbodens 3 auf oder ist fest, d.h. vorzugsweise stoffschlüssig, mit der Innenseite 3a des Kapselkörperbodens 3 verbunden. In der zweiten Variante ist das Filterelement 7 insbesondere nur in einem Randbereich 3' des Kapselbodens 3 am Kapselboden 3 stoffschlüssig befestigt. Das Fliterelement umfasst vorzugsweise ein aus Polyester-Feinfasern hergestellten Vliesstoff. Die Fasern werden besonders bevorzugt mittels eines Kalanders thermisch miteinander verbunden, beispielsweise werden eine Vielzahl von extrudierten Polyesterfasern aufeinander und nebeneinander angeordnet und anschließend mittels beheizten Walzen verfestigt (flach kalandriert). Der Vliesstoff umfasst einen Wirrfaser- und/oder faserorientierten-Vliesstoff. Das Vlies umfasst bevorzugt eine Massenbelegung (auch als Grammatur oder Flächengewicht bezeichnet) zwischen 40 und 100 Gramm pro Quadratmeter, besonders bevorzugt zwischen 60 und 80 Gramm pro Quadratmeter und ganz besonders bevorzugt von im Wesentlichen 70 Gramm pro Quadratmeter auf. Das Filterelement bzw. das Vlies weist bevorzugt eine Dicke zwischen 0,20 und 0,8 Millimetern, besonders bevorzugt zwischen 0,25 und 0,39 Millimetern und ganz besonders bevorzugt von im Wesentlichen 0,32 Millimetern auf. Das Vlies ist derart ausgebildet, dass die Luftdurchlässigkeit des Vlieses bei 100 Pascal bevorzugt zwischen 1000 und 3000 l/(m²s), besonders bevorzugt zwischen 1500 und 2500 (l/m²s) und ganz besonders bevorzugt im Wesentlichen bei 2000 l/(m²s) liegt. Das Vlies ist ferner vorzugsweise derart ausgebildet, dass die Höchstzugkraft in Längsrichtung im Wesentlichen 110 Newton pro 5 Zentimeter und in Querrichtung im Wesentlichen 67 Newton pro 5 Zentimeter beträgt, wobei die Höchstzugkraft-Dehnung in Längsrichtung im Wesentlichen 30 Prozent und in Querrichtung im Wesentlichen 38 Prozent umfasst.

In **Figur 2** ist eine Portionskapsel 1 gemäß der in Figur 1 illustrierten ersten Ausführungsform der vorliegenden Erfindung dargestellt, wobei die Portionskapsel 1 in der Figur 2 in einer geschlossenen Brühkammer 8 angeordnet ist. Die Brühkammer 8 besteht aus einem ersten Brühkammerelement 9 und einem zweiten Brühkammerelement 10, wobei das erste Brühkammerelement 9 zur Einführung der Portionskapsel 1 beweglich gegenüber dem zweiten Brühkammerelement 10 oder umgekehrt vorgesehen ist. Zwischen den beiden Brühkammerelementen 9, 10 ist eine Dichtung 11 angeordnet. Das erste Brühkammerelement 9 besteht im Wesentlichen aus einem Schließkolben 12 mit Einstechelementen 13a, 13b zur Öffnung der Deckelfolie 6 der Portionskapsel 1, einer Zubereitungsflüssigkeitszuführung 14 und der Dichtung 11. Das zweite Brühkammerelement 10 besteht im Wesentlichen aus einer die Portionskapsel 1 teilweise umschließenden Brühkammerglocke 15 mit einem am Boden der Brühkammerglocke 15 angeordneten Öffnungsdorn 16, der mit Ablaufrillen 17 versehen ist, und einem Getränkeablauf 18. Zur Aufnahme der Portionskapsel 1 befindet sich die Brühkammer 8 in einem nicht dargestellten geöffneten Zustand, in welchem das erste und das zweite Brühkammerelement 9, 10 voneinander beabstandet sind, um eine Zuführung der Portionskapsel 1 zu gewährleisten, und dem dargestellten geschlossenen Zustand, in welchem ein Zubereitungsvorgang zur Herstellung eines Getränks mittels der Portionskapsel 1 durchführbar ist. Im geschlossenen Zustand ist die Brühkammer 8 druckdicht verschlossen. Beim Überführen der Brühkammer 8 vom geöffneten Zustand in den abgebildeten geschlossenen Zustand wird die Deckelfolie 6 von den Einstechelementen 13a, 13b durchstochen, so dass Zubereitungsflüssigkeit, insbesondere heißes Brühwasser, durch die Zubereitungsflüssigkeitszuführung 14 unter Druck in den Hohlraum 100 der Portionskapsel 1 gelangt. Ferner wird beim Schließen der Brühkammer 8 der Kapselboden 3 von dem als Öffnungsdorn 16 ausgebildeten Perforationsmittel perforiert, so dass eine Ausgangsöffnung 107 in der Portionskapsel 1 erzeugt wird, durch welche die hergestellte Getränkeflüssigkeit aus der Portionskapsel 1 in Richtung des Getränkeablaufs 18 heraustreten kann. Zur Unterstützung der Ableitung der Getränkeflüssigkeit weist der Öffnungsdorn 16 auf seiner Mantelfläche die Ablaufrillen 17 auf. In der Darstellung ist der Boden 3 der in der Brühkammer 9, 10 befindlichen Portionskapsel 1 von dem Öffnungsdorn 16 des zweiten Brühkammelementes durchstochen, aber das über der Einstichstelle liegende Filterelement 7 ist von der Einstechspitze 19 des Öffnungsdornes 16 leicht angehoben, jedoch nicht durchstochen. Dies wird insbesondere dadurch erreicht, dass der Zentralbereich 7" nicht stoffschlüssig mit dem Kapselboden 3 verbunden ist, sondern das Filterelement 7 lediglich im Randbereich 3' des Kapselbodens 3 stoffschlüssig mit dem Kapselboden 3 verbunden ist, so dass es in Folge des mechanischen Kontaktes mit der Spitze des Öffnungsdorns 16 lediglich vom Kapselboden 3 angehoben wird und somit unperforiert bleibt (d.h. nicht vom Öffnungsdorn 16 perforiert wird). Alternativ oder zusätzlich ist das Filterelement durch das Tiefziehen so geformt, dass an der Einstichstelle von dem Kapselboden abgehoben ist. Im Randbereich 3' des Kapselbodens 3 bzw. im Randbereich 7' des Filterelements 7 bleiben der Kapselboden 3 und das Filterelement 7 miteinander in Kontakt und insbesondere stoffschlüssig miteinander verbunden, so dass keine Getränkesubstanz 101 um das Filterelement 7 herum in den Getränkeablauf 18 gelangt. Der Kapselboden 3 weist in seinem zentralen Punkt 106, in welchem der Kapselboden 3 von dem Öffnungsdorn 16 perforiert wird, optional eine Sollbruchstelle 104 auf, so dass ein vergleichsweise stumpfer Öffnungsdorn 16 zur Perforation des Kapselbodens 3 ausreichend ist und so die Gefahr, dass versehentlich auch das Filterelement 7 vom Öffnungsdorn 16 perforiert wird, ausgeräumt wird.

In **Figur 3** ist eine Portionskapsel 1 gemäß einer zweiten Ausführungsform der vorliegenden Erfindung dargestellt, wobei die zweite Ausführungsform im Wesentlichen der in Figur 2 illustrierten ersten Ausführungsform gleicht und die Portionskapsel 1 ebenfalls in einer geschlossenen Brühkammer 8 dargestellt ist. Im Unterschied zur ersten Ausführungsform weist der Portionskapselboden 3 im Einstechbereich des Öffnungsdornes 16 jedoch eine gegen eine Einbuchtung 20 im Brühkammerboden 3a gerichtete Ausbuchtung 21 auf (die Ausbuchtung 21 ist somit in eine der Einfüllseite 4 entgegengesetzte Richtung gerichtet), in die der Öffnungsdorn 16 einsticht, ohne dabei das Filterelement 7 zu durchstechen. Ein Abheben des Filterelements 7 vom Kapselboden 3 ist somit insbesondere nicht erforderlich. Zur Herstellung des Getränkes wird wiederum nach dem Einbringen der Portionskapsel 1 in die Brühkammer 8, die Brühkammer 8 geschlossen. Während des Schließvorganges wird die Deckelfolie 6 der Portionskapsel 1 mittels der Einstechmittel 13a, 13b perforiert und nach erfolgtem Zusammenführen und Abdichten des ersten und des zweiten Brühkammerelementes 9, 10 (mittels der Dichtung 11) wird Brühwasser über den Flüssigkeitseinlass 6 zur Verfügung gestellt. Ebenso sticht während des Schließvorganges der Brühkammer der Öffnungsdorn 16 eine Öffnung in den Boden 3 der Portionskapsel 1. Das über der Einstichstelle liegende Filterelement 7 ist in seiner Dicke und Reißfestigkeit einer durch Tiefzeihen erhaltenen Form auf die Eindringtiefe der Einstechspitze 19 des Öffnungsdornes 16 abgestimmt, so dass das Filterelement 7 nicht durchstoßen wird. Alternativ liegt das Filterelement 7 über der Ausbuchtung 21 des Kapselbodens 3, die in der Einbuchtung des Brühglockenbodens 23 liegt, und der Öffnungsdorn 16 sticht lediglich in die Ausbuchtung 21 des Kapselbodens 3 und gelangt nicht bis zum Filterelement 7. Sodann strömt die Flüssigkeit, bei der Herstellung von Kaffee beispielsweise heißes Wasser, in die Kapsel 1 ein. In der Kapsel durchströmt diese Flüssigkeit das Getränkesubstrat 101 und extrahiert und/oder löst die für die Getränkeherstellung benötigten Substanzen aus dem Getränkesubstrat 101 aus. Die Strömung der Flüssigkeit in dem Getränkesubstrat 101 ist durch das Bezugszeichen 22 illustriert. Danach strömt das resultierende Getränk durch das zwischen dem Getränkesubstrat 101 und das auf dem Kapselboden 3 angeordnete Filterelement 7, welches verhindert, dass Bestandteile des Getränkesubstrates 101 partikelförmig in das resultierende Getränk gelangen und über die von dem Öffnungsdorn 16 in den Kapselboden 3 gestochene Öffnung und über die Ablaufrillen 17 des Öffnungsdornes 16 weiter in ein Auffanggefäß, beispielsweise eine Tasse oder Kanne, gelangen.

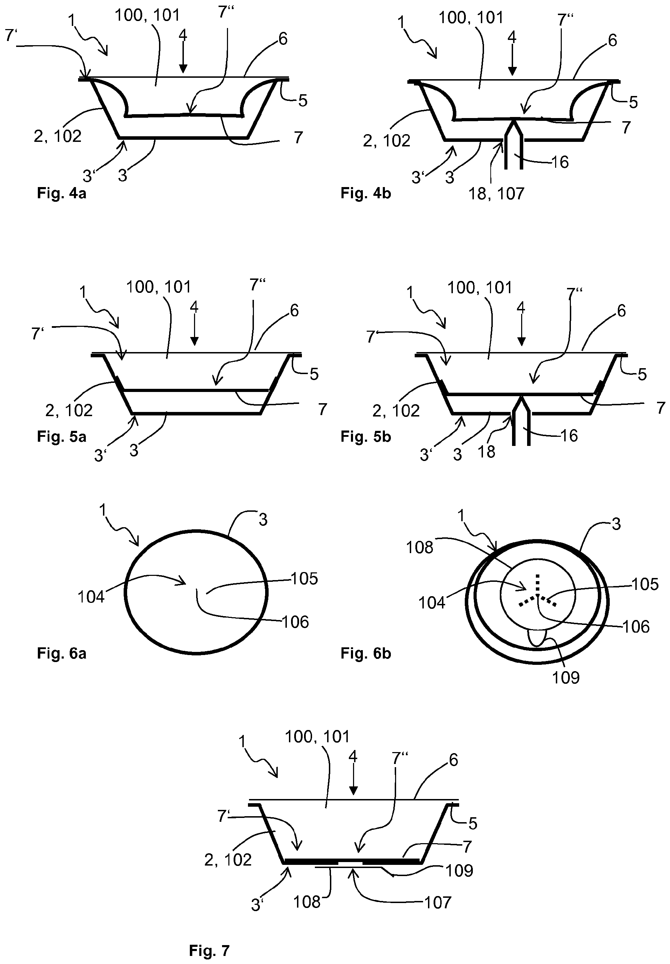

In **Figuren 4a und 4b** sind schematische Schnittbildansichten einer Portionskapsel 1 gemäß einer dritten Ausführungsform der vorliegenden Erfindung dargestellt. In dem vorliegenden Fall ist das Filterelement vorzugsweise aus einem nicht gewebten Fasermaterial gefertigt und besonders bezugt tiefgezogen, d.h. das ursprünglich flache Fasermaterial des Filterelementes ist in eine dreidimensionale Form gebracht worden. In seinem Randbereich 7'ist das Filterelement in dem vorliegenden Fall mit dem Kragenrand 5 des Kapselkörpers verbunden. Dieser Verbund kann beispielsweise durch Siegeln oder Kleben erfolgen. Durch die Befestigung des Filterelementes 7 an dem Kragenrand des Kapselkörpers ist zwischen dem Zentralbereich 7" des Filterelementes und dem Filterboden 3 ein Freiraum vorgesehen, in den ein Einstechdorn 16 beim Aufstechen der Portionskapsel eindringen kann, ohne dass das Filterelement durchstochen wird. Allenfalls wird der Zentralbereich 7" des Filterelementes aufgrund seines Elastizität von dem Einstechdorn verformt. Vorzugsweise ist die Portionskapsel mit einer Deckelfolie 6 verschlossen, die, besonders bevorzugt, mit dem Randbereich des Filterelements verbunden ist, beispielsweise durch Siegeln oder Kleben.

In **Figuren 5a und 5b** sind schematische Schnittbildansichten einer Portionskapsel 1 gemäß einer vierten Ausführungsform der vorliegenden Erfindung dargestellt, wobei auf die zu der dritten Ausführungsform (vgl. Figuren 4a, b) gemachten Ausführungen Bezug genommen wird. In dem vorliegenden Fall ist der Randbereich 7'des Filterelementes mit der Seitenwand des Kapselköpers, beispielsweise durch Siegeln oder Kleben, verbunden. Die Deckelfolie 6 ist in dem vorliegenden Fall direkt mit dem Kragenrand des Kapselkörpers verbunden. Ansonsten wird auf die Ausführungen zu den Figuren 4a, b Bezug genommen. Das Filterelement ist in dem vorliegenden Fall gleichfalls vorzugsweise tiefgezogen.

In **Figuren 6a und 6b** ist eine Ansicht eines Kapselbodens 3 einer Portionskapsel 1 gemäß einer sechsten Ausführungsform, wobei Bezug genommen wird auf jede der voranstehenden Ausführungsformen. Die Portionskapsel 1 ist in Figur 6 von "unten" dargestellt. In dieser Ansicht ist die optionale Sollbruchstelle 104 zu erkennen, welche hier drei Schwächungslinien 105 umfasst, die sternförmig und in radialer Richtung um den zentralen Punkt 106 auf dem Kapselboden 3 herum angeordnet sind. Entlang der Schwächungslinien 105 weist der Kapselboden 3 eine reduzierte Materialstärke auf und/oder ist der Kapselboden 3 vorperforiert, um eine Perforation in der Brühkammer 8 zu begünstigen. Damit das Aroma der Getränkesubstanz 101 auch bei einem vorperforierten Kapselboden 3 über längere Lagerzeiten aufrechterhalten bleibt, ist der Kapselboden 3 zumindest im Bereich der Sollbruchstelle 104 vorzugsweise mit einer perforierbaren oder von Hand abziehbaren Folie 108 versiegelt. Die Folie 108 klebt dazu beispielsweise auf der Außenseite des Kapselbodens 3 und ist mit einer Abziehlasche 109 versehen, welche nicht am Kapselboden 3 klebt und an welcher die Folie 108 von Hand abgezogen werden kann. Eine beispielhafte Ausführungsform mit Schwächungslinien 105 in Form von Perforationen im Kapselboden 3, sowie mit einer Folie 108 ist in Figur 6b illustriert.

In **Figur 7** ist eine Schnittbildansicht einer Portionskapsel 1 gemäß einer achten Ausführungsform der vorliegenden Erfindung dargestellt. Die achte Ausführungsform gleich im Wesentlichen der in Figur 1 dargestellten ersten Ausführungsform, kann aber auch mit jeder anderen dargestellten Ausführungsform kombiniert werden. Die Portionskapseln 1 der achten Ausführungsform ist mit einer permanenten Ausgangsöffnung 107 im Kapselboden 3 ausgestattet, welche in der Ausgangslage mit der Folie 108 abgedichtet ist. Sollbruchstellen weist die Portionskapsel 1 daher nicht auf. Die Folie 108 weist dabei ebenfalls die Abziehlasche 109 zum Abziehen der Folie 108 von Hand auf. Eine Perforation des Kapselbodens 3 mittels eines äußeren Perforationsmittels 16 ist nicht vorgesehen. Vielmehr wird dem Einlegen der Portionskapsel 1 in die Brühkammer 8 wird die Folie 108 mittels der Abziehlasche 109 einfach vom Kapselboden 3 abgezogen und der Brühvorgang kann anschließend direkt und ohne Perforierung des Kapselbodens 3 gestartet werden.

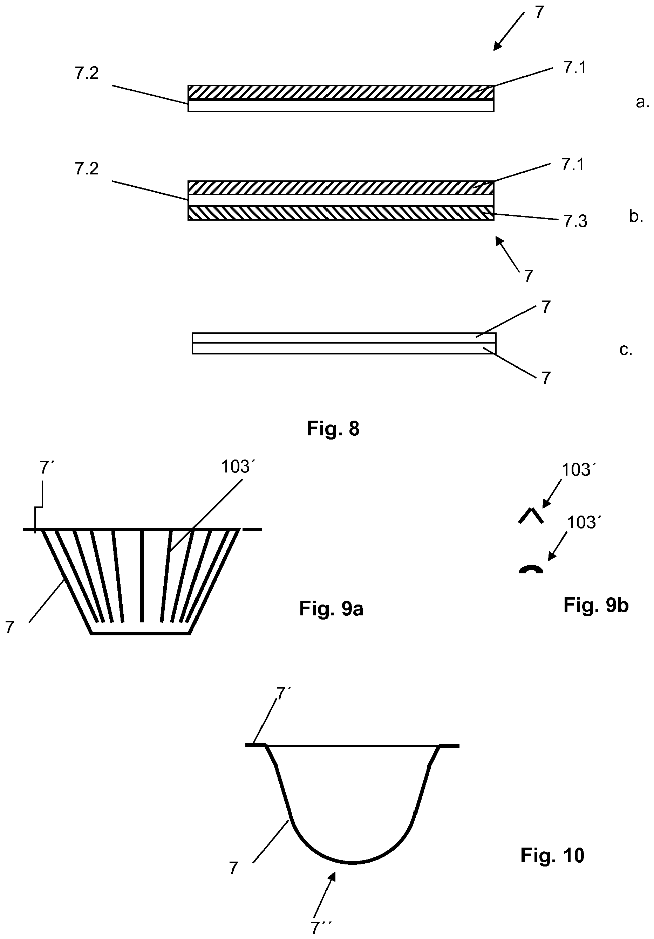

**Figuren 8** **a - c** zeigen unterschiedliche Ausführungsformen eines Filterelementes 7 mit einer Filzstruktur 7.1, insbesondere Nadelfilzstruktur. Dieses Filterelement 7 weist vorzugsweise eine Trägerstruktur 7.2, beispielsweise eine Gewebestruktur auf. An dieser und/oder in diese Gewebestruktur 7.2 wird auf der gesamten, dem Kaffeepulver oder Tee zugewandten Oberfläche eine Filzstruktur 7.1, angeordnet und beispielsweise durch Nadelfilzen mit dieser verbunden, was in Figur 8a dargestellt ist.
Die Ausführungsform gemäß Figur 8b weist zwei Filzstrukturen 7.1 und 7.3 auf, die jeweils an und/oder in der Trägerstruktur angeordnet sind. Beide Strukturen erstrecken sich vorzugsweise über den gesamten Querschnitt, d. h. hier die gesamte kreisförmige Oberfläche, des Filterelementes. Die Filzstrukturen 7.1 und 7.3 können gleich oder unterschiedlich dick sein. Vorzugsweise ist die Filzstruktur 7.1 dünner ausgeführt als die Schicht 7.3 oder umgekehrt. Die Trägerschicht ist dann bezüglich der Mitte, bezogen auf die Dicke, des Filterelementes versetzt vorgesehen sein. Die Strukturen 7.1 und 7.3 können aus unterschiedlichen oder demselben Materiali(en) hergestellt sein. Diese betreffen nicht nur die Substanz aus der sie hergestellt sind, sondern auch die Fadendurchmesser und/oder die Fadenlänge aus denen die Filzstrukturen gefertigt werden. Zwischen den beiden Strukturen 7.1 und 7.3 ist eine Trägerstruktur 7.2 vorgesehen, in der sich kein oder nur wenig Filzstruktur befindet und die vorzugsweise Querströmungen zulässt.
Figur 8c zeigt noch eine weitere Ausführungsform eines Filterelementes mit Filzstruktur. In dem vorliegenden Fall sind zwei Filterelemente 7 mit einer Filzstruktur, wie sie beispielsweise gemäß den Figuren 8a und b beschrieben wurden, übereinander angeordnet. Die Filterelemente 7 können lediglich aufeinander liegen oder miteinander verbunden sein. Die Filterelemente 7 können aber auch nur Filz ohne Trägerstruktur aufweisen.

Alle Filterelemente mit einer Filzstruktur haben den Vorteil, dass sie einen geringen Druckverlust aufweisen, bzw. dass der Druckabbau entlang des Filterelementes mit einem geringen Gradienten erfolgt. Dadurch kann beispielsweise Kaffee ohne Crema, d.h. Schaum, oder Tee ohne Schaum hergestellt werden. Die Filterelemente mit einer Filzstruktur werden vorzugsweise lediglich in die Kapsel eingelegt. Vorzugsweise weist das Filterelement mit der Filzstruktur einen größeren Durchmesser auf als der Boden der Kapsel, so dass es sich im Randbereich gegen die Wandung der Kapsel drückt.

Vorzugsweise ist das Filterelement mit Filzstruktur, insbesondere vollständig, aus PET gefertigt.

Der Fachmann erkennt, dass das Filterelement 7 nicht auf die dargestellte Form beschränkt ist, sondern jede beliebige Form, insbesondere 3D-Form, aufweisen kann. Insbesondere kann das Filterelement gemäß den Figuren 8 a - c auch tiefgezogen sein.

In den Figuren 9a, b ist ein tiefgezogenes Filterelement dargestellt. Dieses weist in dem vorliegenden Fall eine konische Seitenwand und in seinem Randbereich 7'einen flanschartigen Kragen auf, der mit dem Kragenrand 5 des Portionskapselkörpers verbunden werden kann. An dem Randbereich 7' kann auch die Deckelfolie 6 der Portionskapsel angebracht werden. In dem vorliegenden Fall sind in der Seitenwand des Filterelementes Einbuchtungen 103' in Form von Rinnen eingeprägt. Beim der Herstellung des Getränks wird das Filterelement in Richtung der Seitenwand der Portionskapsel gedrückt und berührt diese zumindest abschnittsweise oder die Seitenwand des Filterelementes liegt von Anfang an zumindest abschnittsweise an der Seitenwand des Kapselkörpers an. Die Seitenwand des Kapselkörpers und die Einbuchtung 103' formen einen Kanal durch den das fertiggestellte Getränk abfließt. Der Fachmann erkennt, dass sich die Einbuchtungen vorzugsweise um den gesamten Umfang der Seitenwand des Filterelementes erstrecken und besonders bevorzugt äquidistant vorgesehen sind. Dadurch ergibt sich ein gewellter oder gefalteter Abschnitt 103'. Wie insbesondere Figur 9b entnommen werden kann, kann die Rinne 103' einen dreieckigen oder teilkreisförmigen Querschnitt aufweisen.

Figur 10 zeigt noch eine Ausführungsform eines tiefgezogenen Filterelementes. Im Wesentlichen kann auf die Ausführungen gemäß Figur 9 Bezug genommen werden, wobei in dem vorliegenden Fall der Boden als Kugelboden gestaltet ist und die Seitenwand konisch gestaltet ist, wobei sich der Grad der Konizität der Seitenwand vorzugsweise verändert, vorzugsweise zur Öffnung des Filterelementes hin zunimmt. Die Seitenwand kann bedarfsweise Einbuchtungen 103' aufweisen.

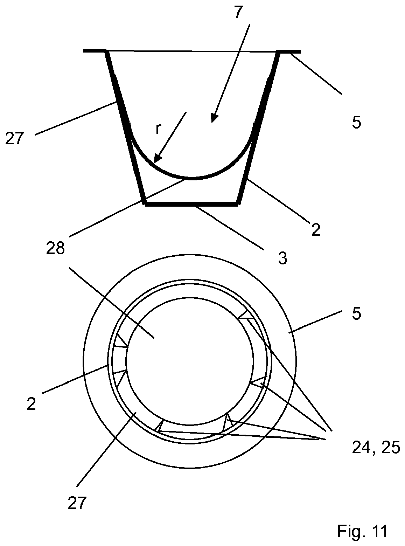

**Figur 11** zeigt eine weitere Ausführungsform der erfindungsgemäßen Portionskapsel in einer Seitenansicht und in einer Draufsicht. Wiederum umfasst die Portionskapsel 1 einen kegelstumpfförmigen Kapselkörper 2 mit einem geschlossenen Kapselboden 3 und mit einem an seiner Einfüllseite 4 angeordneten Kragenrand 5, auf den eine Deckelfolie 6 aufgeschweißt oder aufgeklebt ist. Der Kapselboden kann mit einer vergleichsweise großen Öffnung, insbesondere kreisförmigen Öffnung, versehen sein, die mittels einer beispielsweise abziehbaren Folie verschlossen ist. Im Inneren der Portionskapsel befindet sich ein Filterelement 7, das einen Verbindungsbereich 27 und einen Filterbereich 28 aufweist. In dem Verbindungsbereich 27 ist das Filterelement mit dem Kapselkörper 2, insbesondere durch Siegeln, d. h. unter Wärme- und/oder Druckeinfluss, verbunden. Der Filterbereich wird von dem flüssigen fertigen Getränk durchströmt. Es ist deutlich zu erkennen, dass zwischen dem Kapselboden und dem Filterelement ein Abstand vorgesehen ist, der vorzugsweise so groß ist, dass das Filterelement unter Druck und/oder Flüssigkeitseinfluss den Kapselboden nicht berührt. Weiterhin bevorzugt ist der Abstand so groß vorgesehen, dass ein eventueller Öffnungsdorn, der in der Brühkammer vorgesehen ist (vgl. beispielsweise Figuren 4 b, 5 b), das Filterelement nicht berührt. In dem vorliegenden Fall weist der Filterbereich eine Krümmung auf, was durch den Radius r symbolisiert ist. Der Fachmann versteht, dass die Krümmung keine kreissegmentförmige Krümmung sein muss. Vorzugsweise ist das Filterelement aus einem Werkstoff, der im Wesentlichen aus Papier oder einem papierähnlichen Material besteht, gefertigt. Dieses Material ist, zumindest abschnittsweise, vorzugsweise mit einem siegelfähigen Kunststoffmaterial beschichtet, damit das Filterelement durch Siegeln mit dem Kapselkörper verbunden werden kann. Die Portionskapsel wird vorzugsweise dadurch hergestellt, dass das Filterelement als ebene, beispielsweise kreisförmige, Scheibe vorgesehen wird, die mittels eines Stempels in die Portionskapsel hineingedrückt wird, bis der Verbindungsbereich 27 des Filterelementes 7 an dem Kapselkörper anliegt. Das Filterelement wird aber nur soweit in die Portionskapsel hineingedrückt, dass ein Abstand zwischen der Unterseite des Filterelements und des Kapselbodens bestehen bleibt. Anschließend wird durch Einwirkung von Hitze und Druck, beispielsweise dadurch, dass der Stempel beheizt ist, das Filterelement an den Kapselkörper gesiegelt. Vor dem Siegeln wird der Filterbereich 28 des Filterelements vorzugsweise entlastet. Dies kann beispielsweise dadurch erfolgen, dass der Stempel zweiteilig vorgesehen ist und der untere Teil des Stempels entgegen der Einführrichtung des Stempels nach oben gezogen wird. Dadurch wird der Filterbereich 28 entlastet, ohne dass der Druck auf den Verbindungsbereich reduziert wird.

Der untere Teil von Figur 11 zeigt die erfindungsgemäße Portionskapsel, nachdem das Filterelement mit dem Kapselkörper verbunden worden ist. Es ist deutlich zu erkennen, dass im Verbindungsbereich 27 mehrere Falten 24 und/oder mehrlagige Bereiche 25 vorgesehen sind, wobei sich die Falten 24 bzw. mehrlagigen Bereiche 25 vorzugsweise in ihrer Form und/oder Größe unterscheiden und ihr Abstand zueinander vorzugsweise unterschiedlich ist wobei ihre Form im Wesentlichen dreickig ist Des Weiteren ist zu erkennen, dass die Falten 24 bzw. mehrlagigen Bereiche 25 an dem Verbindungsbereich anliegen und die Lagen der Falten durch Siegeln miteinander verbunden sind.

### Bezugszeichenliste

- 1: Portionskapsel
- 2: Kapselkörper
- 3: Kapselboden
- 3a: Kapselboden-Innenseite
- 3': Randbereich des Kapselbodens
- 4: Einfüllseite
- 5: Kragenrand
- 6: Deckel, Deckelfolie
- 7: Filterelement
- 7': Randbereich des Filterelements
- 7": Zentralbereich des Filterelements
- 7.1: Filzstruktur, Nadelfilzstruktur
- 7.2: Trägerstruktur
- 7.3: Filzstruktur, Nadelfilzstruktur
- 8: Brühkammer
- 9: Erstes Brühkammerelement
- 10: Zweites Brühkammerelement
- 11: Dichtung
- 12: Schließkolben
- 13a: Einstechelement
- 13b: Einstechelement
- 14: Zubereitungsflüssigkeitszufuhr
- 15: Brühglocke
- 16: Öffnungsdorn
- 17: Auslaufrillen
- 18: Ablauf
- 19: Einstechspitze
- 20: Einbuchtung
- 21: Ein-/Ausbuchtung
- 22: Zubereitungsflüssigkeitsfluss
- 23: Brühglockenboden
- 24: Falte
- 25: mehrlagiger Bereich
- 27: Verbindungsbereich
- 28: Filterbereich
- 100: Hohlraum
- 101: Getränkesubstrat
- 102: Seitenwandbereich
- 103': Einbuchtung, gewellter oder gefalteter Bereich
- 104: Sollbruchstelle
- 105: Schwächungslinien
- 106: Zentraler Punkt
- 107: Öffnung, Ausgangsöffnung
- 108: Folie
- 109: Abziehlasche
- r: Radius der Krümmung der Filterfläche

## Patentansprüche

1. Portionskapsel (1) zur Herstellung eines Getränks aufweisend einen Kapselkörper (2) mit einem Kapselboden (3) und einem Deckel (6), wobei zwischen dem Kapselboden (3) und dem Deckel (6) ein Hohlraum (100) zur Aufnahme eines pulverförmigen oder flüssigen Getränkesubstrats (101) ausgebildet ist und wobei in dem Hohlraum ein Filterelement (7) angeordnet ist und das Filterelement aus nicht gewebtem Fasermaterial gefertigt ist, **dadurch gekennzeichnet, dass** das Fasermaterial plastisch geformt, vorzugsweise tiefgezogen, ist.

2. Portionskapsel (1) nach Anspruch 1, **dadurch gekennzeichnet, dass** das Filterelement mit dem Kapselkörper (2) verbunden ist.

3. Portionskapsel (1) nach Anspruch 1 **dadurch gekennzeichnet, dass** das Filterelement mit einem Kragenrand (5) verbunden ist.

4. Portionskapsel (1) nach einem der voranstehenden Ansprüche, **dadurch gekennzeichnet, dass** das Filterelement einen Filterbereich (28) und einen Verbindungsbereich (27) aufweist und dass der Verbindungsbereich abgewinkelt von dem Filterbereich vorgesehen ist.

5. Portionskapsel (1) nach einem der voranstehenden Ansprüche, **dadurch gekennzeichnet, dass** das Filterelement einen Filterbereich (28) aufweist, der gekrümmt vorgesehen ist.

6. Portionskapsel nach einem der voranstehenden Ansprüche, **dadurch gekennzeichnet, dass** das Filterelement in seinem Verbindungsbereich mindestens eine Falte (24) aufweist.

7. Portionskapsel nach Anspruch 6, **dadurch gekennzeichnet, dass** er mehrere Falten (24) aufweist, die vorzugsweise unregelmäßig vorgesehen sind.

8. Portionskapsel nach einem der voranstehenden Ansprüche, **dadurch gekennzeichnet, dass** ein Bestandteil des Filterelements Papier ist.

9. Portionskapsel nach einem der voranstehenden Ansprüche, **dadurch gekennzeichnet, dass** das Filterelement ein Vlies ist und/oder eine Filzstruktur aufweist.

10. Portionskapsel (1) nach Anspruch 9, **dadurch gekennzeichnet, dass** das Vlies einen aus Polyester-Feinfasern hergestellten Vliesstoff umfasst und/oder dass das Vlies eine Massenbelegung zwischen 40 und 100 Gramm pro Quadratmeter, bevorzugt zwischen 60 und 80 Gramm pro Quadratmeter und besonders bevorzugt von im Wesentlichen 70 Gramm pro Quadratmeter aufweist und/oder dass das Vlies eine Dicke zwischen 0,20 und 0,8 Millimetern, bevorzugt zwischen 0,25 und 0,39 Millimetern und besonders bevorzugt von im Wesentlichen 0,32 Millimetern aufweist und/oder dass das Vlies eine Luftdurchlässigkeit bei einem Druck von 100 Pascal zwischen 1000 und 3000 l/(m²s), bevorzugt zwischen 1500 und 2500 (l/m²s) und besonders bevorzugt im Wesentlichen bei 2000 l/(m²s) aufweist.

11. Portionskapsel nach Anspruch 9, **dadurch gekennzeichnet, dass** das Filterelement (7) zwei Filzstrukturen (7.1., 7.3), vorzugsweise Nadelfilzstrukturen, aufweist, die vorzugsweise durch eine Trägerstruktur (7.2) voneinander getrennt sind.

12. Portionskapsel (1) nach einem der vorhergehenden Ansprüche, **dadurch gekennzeichnet, dass** das Filterelement (7) elastisch ausgebildet ist.

13. Portionskapsel (1) nach einem der vorhergehenden Ansprüche, **dadurch gekennzeichnet, dass** das Filterelement (7) an den Kapselkörper (2) oder an den Kragenrand (5) der Kapsel gesiegelt, insbesondere ultraschallgesiegelt ist.

14. Portionskapsel (1) nach einem der vorhergehenden Ansprüche, **dadurch gekennzeichnet, dass** an das Filterelement (7) eine Deckelfolie (6) gesiegelt ist.

15. Portionskapsel (1) nach einem der vorhergehenden Ansprüche, **dadurch gekennzeichnet, dass** der Durchmesser des Filterelements (7) größer als der Durchmesser des Kapselbodens (3) ist.
